# EUROPEAN PATENT SPECIFICATION

(11) **EP 2 434 777 B1**
(45) Date of publication and mention of the grant of the patent: **28.10.2015**
(21) Application number: 11188661.0
(22) Date of filing: 30.05.2008
(51) Int. Cl.: H04R 1/10, H04R 5/00

(54) **Improved earpiece**
Verbesserter Ohrhörer
Écouteur amélioré

(30) Priority: 01.06.2007 NO 20072812
(43) Date of publication of application: 28.03.2012
(62) Divisional of application: 08766905.7
(73) Proprietor: Freebit AS, 0280 Oslo (NO)
(72) Inventor: Steenfeldt Berg, Richard, NO-0208 Oslo (NO)
(74) Representative: Acapo AS

(56) References cited:
- WO-A1-02/45390
- WO-A1-03/075608
- WO-A1-03/096745
- WO-A1-2004/100508
- DE-A1-102005 044 417
- DE-U1- 8 328 154
- US-A1- 2005 008 180
- BURKHARD M D ET AL: "Anthropometric manikin for acoustic research", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 58, no. 1, 1 July 1975 (1975-07-01), pages 214-222, XP002391618, ISSN: 0001-4966, DOI: 10.1121/1.380648
- ALGAZI V R ET AL: "The CIPIC HRTF database", APPLICATIONIS OF SIGNAL PROCESSING TO AUDIO AND ACOUSTICS, 2001 IEEE W ORKSHOP ON THE OCT. 21-24, 2001, PISCATAWAY, NJ, USA,IEEE, 21 October 2001 (2001-10-21), pages 99-102, XP010566884, ISBN: 978-0-7803-7126-2

## Description

### Background of the invention

### Filed of the invention

The present invention regards a device for removable attachment to the ear as disclosed in the preamble of claim 1.

### Background information

Microphone/earpiece combinations, wireless or attached by wire, to telephones, music systems, switchboards etc. are well known. Such known devices, however, frequently use a bow for the earpieces and a microphone attached to said bow. Such devices are not well suited for use with mobile apparatuses since the device should have a form that makes it easy to stow it in a pocket, bag or the like when not in use.

From the prior art one should refer to US 6 122 388 and US 5 659 156. These are earmold devices where a plug is brought into the ear canal and are typically used in hearing devices. These are not suited for mass production since each has to be adapted to each user for the stable positioning and comfortable use. This is particularly due to the opening in the ear that the ear plug is brought into differs from person to person. The outer part of the ear also differs from person to person yet these differences are not so great. Thus, using the outer shape of the ear for attachment of an ear unit only 2 or 3 different sizes will accomplish said differences.

Also an ear plug will block the ear canal and appear uncomfortable to a user. Moreover the natural production of ear wax will not escape, thus necessitating flushing of the ear at regular intervals.

References should also be made to US 5 943 627 regarding an ear piece with built in microphone. Ear pieces for walkmen and the like are known, using the outer part of the ear for attachment, yet these have a circular shape and exploit only the lower part of the outer cavity of an ear for attachment and small differences in the size of the ear will cause said ear pieces not to fit particularly well.

References should also be made to a German utility patent DE 27718483 U1 where an inner clamp forces hoops outwardly towards the inner parts of the ear cavity in order to secure an attachment. The disadvantage is the constant outward pressure being exerted which over time can lead to discomfort.

Further references should be made to WO 02/45390, related to Norwegian patent NO 312 989 belonging to the applicant where a comfortable attachment is achieved by a combination of an ear unit formed as a large C placed under the tragus of the ear while further stability is assured by one part extending from the ear unit in the intertragic notch.

Also a reference should be made to WO 01/50813, an ear mould, filling in a substantial part of the ear mussel and the intertragic notch.

Next a reference should be made to WO 2004/100508, an ear unit using pads, where one of the support pads of is positioned between the Tragus and the Antitragus.

Finally, references should also be made to the Norwegian patent NO 312 909.

Also a reference should be made to US 2005/0008180 regarding a generally symmetric earpiece for use in either ear and made from a resilient material.

### Objective of the invention

Based on the prior art the object of the invention is to avoid these disadvantages and limitation and simultaneously provide a further improvement in stability and comfortable attachment of an ear unit with the possibility of further functionality.

### Summary of the invention

This is provided by a device as disclosed by claim 1. Further features of the invention are disclosed by the remaining dependent claims.

The shape of the ear unit keeps the ear canal to certain degree open towards the outer environment for improved comfort when compared to a unit that closes or blocks the ear canal.

### Brief description of the drawings

Where is embodiments of the invention will be disclosed with references to the drawings, where:
Fig. 1 shows schematically an ear with a curve along with a part extending down.
Fig. 2 shows an ear unit according to the present invention along with a microphone device.
Fig. 3 shows an ear unit according to the present invention with a curvature enabling the ear unit to fit closely against the ear mussel.
Fig. 4 shows the curvature of fig. 3 from the opposite side and also an incision shaped in such a way that the incision is stabilized comfortably in the intertragic notch.
Fig. 5 shows an embodiment of the present invention comprising the curvature fitting closely against the ear mussel, the incision positioned stably into the intertragic notch and a part extending down from the ear unit.

### Detailed description of the invention

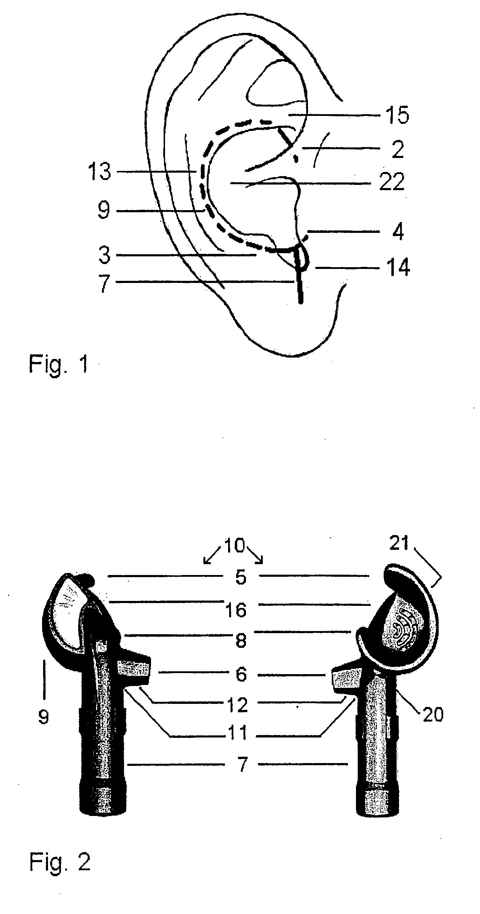

Fig. 1 shows schematically an ear with a decremental curve 1 inserted. As shown by the figure the outer periphery of the ear unit is held in the ear by the outer parts of the ear such that the lower part of the antihelix 13, antitragus 3 and tragus 4 of the ear and part extending downwards 7, but intertragic notch 14. Parts of the curve is positioned inside the antihelix 13 when viewed from the outside of the ear where said parts therefore are not visible.

By the present invention, a larger part of the outer ear is utilized, thus achieving high stability while providing more comfort to the user than the previously known solutions. The present invention also utilizes the upper part of the antihelix 13 and the cavity covered by the lower node 15 of the antihelix and the flap 2 covering said cavity by the outer part of the ear adjacent to the head.

The ear unit 10 according to the present invention is shown schematically in figure 2, with a microphone 6 and optionally a microphone rod 12 connected to the ear unit 10 at the junction point 11. Said microphone rod comprises the connection between the microphone 6 and the transmitter/receiver arranged in the ear unit 10. The power supply for the transmitter/receiver can optionally be arranged in the ear unit, for instance in the lower part 7 of the ear unit 10 for instance in the form of a rechargeable battery, for instance a miniature penlight cell that by virtue of its shape and weight leads to a low centre of gravity relative to the rotational axis formed at the landing point in a lower part of the ear cavity (by the intertragic notch 14). This helps increase the dynamic stability of ear unit 10 when the user is in motion. If the centre of gravity is too high and any centripetal forces caused by quick movements on the users behalf, it would cause the ear unit 10 to be pulled out of position from above. The antenna of the wireless part may be positioned for instance in the microphone rod.

Ear unit 10 comprises a decremental curve 9 of the outer part of the ear unit corresponding to the antihelix 13 with a surface shaped in such a way that the curve falls along the inner part of the antihelix 13 and is partly positioned under antitragus 3 of the ear. The optional lower part 7 extends from the curve while providing a guide and a weight for the correct positioning of the ear unit 10 by more or less lying in the intertragic notch 14 of the ear. The upper part of the curve projects into the cavity covered by the lower node 15 of the antihelix and underneath the flap 2 covering the lower part of said cavity. Investigations show that a contiguous line in the form of a decremental curve will fit in to the ear of nearly everyone.

By use of the ear unit 10, an opening is formed between the outer periphery 16 and the wall of the ear. This means that the ends 5 and 8 of the curve project out from the casing of the ear unit 10. Likewise, the part of the ear unit 10 comprising the hearing element is retracted slightly relative to the curve, ensuring that the hearing element does not abut the auditory canal directly, allowing the formation of an opening between the auditory canal and the surroundings.

The ear unit 10 is formed with a curvature 21 in such a way that it follows along the inner surface of ear mussel 22 when the ear unit 10 is positioned into the ear. This contact surface provides further stability since a larger area is placed against the ear mussel, and thereby increased comfort.

The ear unit 10 is optionally arranged with an incision 20 so that it positions itself into the intertragic notch 14 when the ear unit 10 is positioned in the ear. This incision provides further stability and increased comfort.

Figure 2 shows a typical embodiment of the invention with a part extending down 7 together with an incision 20 which ensures that said downward projecting part aligns with the intertragic notch 14 when the ear unit 10 is positioned into the ear.

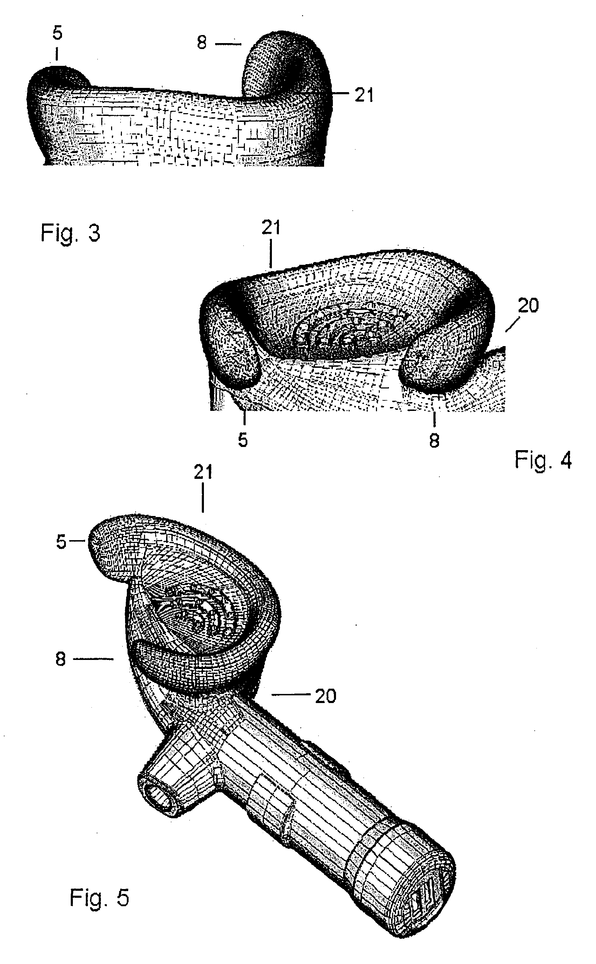

Figure 3 shows the ear piece 10 from the outside in such a way that the curvature 21 is clearly shown.

Figures 4 and 5 show the ear piece from two different angles in such a way that the incision 20 is clearly shown.

## Claims

1. Ear unit for stable fittings in an ear, wherein
said ear unit (10) is shaped as a decremental curve, in that said decremental curve (9) of the outer part of the ear unit (10) corresponds to antihelix (13) of the ear with a surface shaped in such a way that the curve falls along the inner part of the antihelix (13) and is partly positioned under antitragus (3), and that
the distance between the ends (5, 8) of the decremental curve is approximately equal to the distance between a first cavity formed under the tragus (4) of the ear and second cavity covered by the lower node (15) of the antihelix of the ear,
**characterized in that** said ear unit having a curvature providing an improved attachment **in that** said curvature follows the inner surface of the ear mussel (22) to provide a contact surface, thereby enabling the ear unit to fit closely against the ear mussel when the ear unit (10) is positioned into the ear.

2. Device according to claim 1, **characterized in that** the ear unit (10) comprises a part (7) extending downwards, the transition between said part (7) and the ear unit is formed in such a way that it aligns along the intertragic notch (14).

3. Device according to claims 1-2, **characterized in that** the ear unit further comprises at least one unit from the group comprising ear phone and microphone.

4. Device according to claims 1-3, **characterized in that** said ear unit further comprises a unit from the group of
wireless communication unit for use with mobile piece and the like, and
wired communication unit for use with music system and the like.

5. A device comprising an ear unit according to claims 1-4, **characterized in that** said ear unit is operated together with at least a second ear unit according to claims 1 - 4 to form a stereo effect.

## Patentansprüche

1. Ohrgerät für eine stabile Anpassung an ein Ohr, wobei
das Ohrgerät (10) mit einer abnehmenden Kurve geformt ist, indem die abnehmende Kurve (9) des äußeren Teils der Ohreinheit (10) der Antihelix (13) des Ohrs mit einer Oberfläche entspricht, die so geformt ist, dass die Kurve entlang dem inneren Teil der Antihelix (13) abnimmt und teilweise unter dem Antitragus (3) positioniert ist, und dass
der Abstand zwischen den Enden (5, 8) der abnehmenden Kurve näherungsweise gleich dem Abstand zwischen einem ersten Hohlraum, der unter dem Tragus (4) des Ohres ausgebildet ist, und dem zweiten Hohlraum ist, der durch den unteren Knoten (15) der Antihelix des Ohrs bedeckt ist,
**dadurch gekennzeichnet, dass** das Ohrgerät eine Krümmung aufweist, die ein verbessertes Anbringen dahingehend ermöglicht, dass
die Krümmung der inneren Oberfläche der Ohrmuschel (22) so folgt, dass eine Kontaktoberfläche entsteht, wodurch das Ohrgerät eng an die Ohrmuschel anliegend angepasst werden kann, wenn das Ohrgerät (10) in dem Ohr positioniert wird.

2. Gerät nach Anspruch 1, **dadurch gekennzeichnet, dass** das Ohrgerät (10) einen Teil (7) aufweist, der sich nach unten erstreckt, wobei der Übergang zwischen dem Teil (7) und dem Ohrgerät derart ausgebildet ist, dass er die Incisura intertragica (14) entlang ausgerichtet ist.

3. Gerät nach den Ansprüchen 1 bis 2, **dadurch gekennzeichnet, dass** das Ohrgerät ferner zumindest ein Gerät aus der aus einem Kopfhörer und einem Mikrophon bestehenden Gruppe aufweist.

4. Gerät nach den Ansprüchen 1 bis 3, **dadurch gekennzeichnet, dass** das Ohrgerät ferner ein Gerät aus der Gruppe aus
einem drahtlosen Kommunikationsgerät zur Verwendung mit einer mobilen Einheit und dergleichen und
einem verkabelten Kommunikationsgerät zur Verwendung mit einem Musiksystem und der gleichen aufweist.

5. Ein Ohrgerät aufweisendes Gerät nach den Ansprüchen 1 bis 4, **dadurch gekennzeichnet, dass** das Ohrgerät zusammen mit zumindest einem zweiten Ohrgerät nach den Ansprüchen 1 bis 4 betätigt wird, um einen Stereoeffekt zu erzeugen.

## Revendications

1. Unité d'oreillette, destinée à être ajustée de manière stable dans une oreille, dans laquelle
ladite unité d'oreillette (10) a la forme d'une courbe décrémentielle, ladite courbe décrémentielle (9) de la partie externe de l'unité d'oreillette (10) correspondant à l'anthélix (13) de l'oreille, avec une surface formée de sorte que la courbe retombe le long de la partie interne de l'anthélix (13) et est en partie positionnée au-dessous de l'antitragus (3) ; et
la distance entre les extrémités (5, 8) de la courbe décrémentielle est approximativement égale à la distance entre une première cavité formée au-dessous du tragus (4) de l'oreille, et une deuxième cavité recouverte par le noeud inférieur (15) de l'anthélix de l'oreille;
**caractérisée en ce que** ladite unité d'oreillette a une courbure assurant une fixation améliorée, et **en ce que**
ladite courbure suit la surface interne du moule de l'oreille (22), pour établir une surface de contact, permettant ainsi l'adaptation étroite de l'unité d'oreillette contre le moule de l'oreille lorsque l'unité d'oreillette (10) est positionnée dans l'oreille.

2. Dispositif selon la revendication 1, **caractérisé en ce que** l'unité d'oreillette (10) comprend une partie (7) s'étendant vers le bas, la transition entre ladite partie (7) et l'unité d'oreillette étant formée de sorte à être alignée le long de l'encoche intertragienne (14).

3. Dispositif selon les revendications 1 à 2, **caractérisé en ce que** l'unité d'oreillette comprend en outre une unité du groupe comprenant un écouteur et un microphone.

4. Dispositif selon les revendications 1 à 3, **caractérisé en ce que** ladite unité d'oreillette comprend en outre une unité du groupe constitué de :
une unité de communication sans fil, destinée à être utilisée avec un téléphone portable et similaire, et
une unité de communication câblée, destinée à être utilisée avec un système de musique et similaire.

5. Dispositif, comprenant une unité d'oreillette selon les revendications 1 à 4, **caractérisé en ce que** ladite unité d'oreillette est actionnée ensemble avec au moins une deuxième unité d'oreillette selon les revendications 1 à 4 pour former un effet stéréo.
